(19) Europäisches Patentamt
European Patent Office
Office européen des brevets

(11) **EP 4 080 415 A1**

(12) **EUROPEAN PATENT APPLICATION**
published in accordance with Art. 153(4) EPC

(43) Date of publication:
**26.10.2022  Bulletin 2022/43**

(21) Application number: **20915287.5**

(22) Date of filing: **25.09.2020**

(51) International Patent Classification (IPC):
*G06N 3/08* $^{(2006.01)}$

(52) Cooperative Patent Classification (CPC):
**G06N 3/04; G06N 3/06; G06N 3/08; G06T 1/00**

(86) International application number:
**PCT/CN2020/117900**

(87) International publication number:
**WO 2021/147365 (29.07.2021 Gazette 2021/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.01.2020  CN 202010077091**

(71) Applicant: **Huawei Technologies Co., Ltd.**
**Shenzhen, Guangdong 518129, (CN)**

(72) Inventors:
• **ZOU, Shengyuan**
  **Shenzhen, Guangdong 518129 (CN)**
• **CHANG, Ya**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **IMAGE PROCESSING MODEL TRAINING METHOD AND DEVICE**

(57) Embodiments of this application relate to an image processing model training method and apparatus. The method includes: inputting image data in a training dataset into an image processing model to perform processing, to obtain a processing result corresponding to the image data, where parameters of n1 neurons are scaled up, and parameters of n2 neurons are scaled down in the image processing model; calculating an error between an annotation result of the image data in the training dataset and the processing result; and adjusting parameters of the image processing model based on the error between the annotation result and the processing result, where n1 and n2 are positive integers. An anti-interference capability of the image processing model is improved by scaling up and scaling down the parameters of the neurons, to suppress overfitting and ensure training efficiency of the image processing model.

Input image data in a training dataset into an image processing model to perform processing, to obtain a processing result corresponding to the image data, where parameters of n1 neurons are scaled up, and parameters of n2 neurons are scaled down in the image processing model  ~ S1201

Calculate an error between an annotation result of the image data in the training dataset and the processing result  ~ S1202

Adjust parameters of the image processing model based on the error between the annotation result and the processing result  ~ S1203

FIG. 12

EP 4 080 415 A1

# Description

## CROSS-REFERENCE TO RELATED APPLICATIONS

This application claims priority to Chinese Patent Application No. 202010077091.4, filed with the China National Intellectual Property Administration on January 23, 2020 and entitled "IMAGE PROCESSING MODEL TRAINING METHOD AND APPARATUS", which is incorporated herein by reference in its entirety.

## TECHNICAL FIELD

The present invention relates to the field of neural network technologies, and in particular, to an image processing model training method and apparatus.

## BACKGROUND

An image processing model is used to perform processing such as detection, partitioning, and classification on images. The image processing model is generally a model based on a neural network architecture. The image processing model includes a plurality of neural network layers, and each neural network layer includes a plurality of neurons. Parameters for the neurons may be trained by using training data in a training dataset, to train the image processing model.

During training of the image processing model, the training data in the training dataset is input into the image processing model, and the image processing model calculates an output result of the training data. An annotation result of the training data is compared with the output result of the image processing model. Parameters for the image processing model are adjusted based on a comparison result until the output result of the image processing model is close to the annotation result, or the output result of the image processing model is the same as the annotation result.

After the training of the image processing model is completed, accuracy of the image processing model is generally further verified by using test data. Overfitting may occur when the image processing model is verified. Overfitting means that the image processing model can well fit the annotation result of the training data, but cannot well fit an annotation result of the test data. In addition, as the image processing model is trained for more times, better fitting on the annotation result of the training data indicates worse fitting on the annotation result of the test data. Therefore, overfitting affects the accuracy of the image processing model, and how to suppress the overfitting becomes an important problem that needs to be resolved during image processing.

## SUMMARY

Embodiments of this application provide an image processing model training method and apparatus, to suppress overfitting and improve accuracy of an image processing model.

According to a first aspect, an embodiment of this application provides an image processing model training method. The method includes: inputting image data in a training dataset into an image processing model to perform processing, to obtain a processing result corresponding to the image data, where parameters of n1 neurons are scaled up, and parameters of n2 neurons are scaled down in the image processing model; calculating an error between an annotation result of the image data in the training dataset and the processing result; and adjusting parameters of the image processing model based on the error between the annotation result and the processing result, where n1 and n2 are positive integers.

In this embodiment of this application, the image processing model training apparatus scales the parameters of the neurons in the image processing model, and scrambles a training process of the image processing model, so that an anti-interference capability of the image processing model is improved, to suppress the overfitting, improve the accuracy of the image processing model, and further ensure training efficiency of the image processing model.

In a possible design, the image processing model is a model based on a neural network architecture, the neural network architecture includes M neural network layers, and the M neural network layers include an input layer, a hidden layer, and an output layer; and parameters of n1 neurons at m neural network layers in the image processing model are scaled up, and parameters of n2 neurons at the m neural network layers are scaled down, where M and m are positive integers, and m is less than or equal to M. During each training, parameters of neurons at m neural network layers are selected for scaling. By selecting different m neural network layers during each training, the anti-interference capability of the image processing model can be further improved, to further better suppress the overfitting.

In a possible design, before the inputting image data in a training dataset into an image processing model to perform processing, the method further includes: determining a scaling ratio and a scaling multiple of each of the m neural network layers, where the scaling multiple includes a scale-down multiple and a scale-up multiple; determining, based on the scaling ratio of each of the m neural network layers, neurons with to-be-scaled-up parameters and neurons with to-be-scaled-down parameters at each neural network layer, where n1 is a total quantity of the neurons with to-be-scaled-up parameters at each neural network layer, and n2 is a total quantity of the neurons with to-be-scaled-down parameters at each neural network layer; and scaling up parameters of the neurons with to-be-scaled-up parameters at each neural network layer based on the scale-up multiple of each of the m neural network layers; and scaling down parameters of the neurons with to-be-scaled-down parameters at each neural network layer based on the scale-down multiple of each neural network layer. Before each training, neurons with to-be-scaled-up parameters and neurons with to-be-scaled-down parameters are selected, then parameters of the neurons with to-be-scaled-up parameters are scaled up by using a corresponding scale-up multiple, and parameters of the neurons with to-be-scaled-down parameters are scaled down by using a corresponding scale-up multiple, to increase interference to the image processing model before each training, so that the anti-interference capability of the image processing model can be further improved, to further better suppress the overfitting.

In a possible design, each of the m neural network layers includes at least one group of neurons with to-be-scaled-up parameters and at least one group of neurons with to-be-scaled-down parameters, and the at least one group of neurons with to-be-scaled-up parameters and the at least one group of neurons with to-be-scaled-down parameters form N groups of neurons; the scaling up parameters of the neurons with to-be-scaled-up parameters at each neural network layer based on the scale-up multiple of each of the m neural network layers includes: scaling up parameters of neurons in each group of neurons with to-be-scaled-up parameters based on a scale-up multiple corresponding to each group of neurons with to-be-scaled-up parameters at each neural network layer; and the scaling down parameters of the neurons with to-be-scaled-down parameters at each neural network layer based on the scale-down multiple of each neural network layer includes: scaling down parameters of neurons in each group of neurons with to-be-scaled-down parameters based on a scale-down multiple corresponding to each group of neurons with to-be-scaled-down parameters at each neural network layer. By selecting different groups of neurons, more combinations of scaling-up and scaling-down may be provided, to increase interference to the image processing model before each training, so that the anti-interference capability of the image processing model can be further improved, to further better suppress the overfitting.

Each of the N groups of neurons may have a same quantity or different quantities of neurons.

In a possible design, each of the N groups of neurons has a same quantity of neurons, and meets the following condition: N is a sum of the scale-up multiple corresponding to each group of neurons with to-be-scaled-up parameters and the scale-down multiple corresponding to each group of neurons with to-be-scaled-down parameters.

In a possible design, each of the N groups of neurons has different quantities of neurons, and meets the following condition: N is a sum of a scale-up multiple of all neurons in each group of neurons with to-be-scaled-up parameters and a scale-down multiple of all neurons in each group of neurons with to-be-scaled-down parameters, where the scale-up multiple of all the neurons in each group of neurons with to-be-scaled-up parameters is a product of a quantity of each group of neurons with to-be-scaled-up parameters and a corresponding scale-up multiple, and the scale-down multiple of all the neurons in each group of neurons with to-be-scaled-down parameters is a product of a quantity of each group of neurons with to-be-scaled-down parameters and a corresponding scale-down multiple.

In a possible design, the image data is all or a portion of image data in the training dataset.

In a possible design, after the adjusting parameters of the image processing model based on the error between the annotation result and the processing result, the method further includes: scaling down the parameters of the n1 neurons; and/or scaling up the parameters of the n2 neurons.

According to a second aspect, an embodiment of this application provides an image processing model training apparatus. The apparatus may have functions of implementing any one of the first aspect or the possible designs of the first aspect. The functions of the image processing model training apparatus may be implemented by hardware, or may be implemented by hardware executing corresponding software. The hardware or the software includes one or more modules corresponding to the functions. The apparatus may include: a processing unit, a calculation unit, and an adjustment unit.

The processing unit is configured to input image data in a training dataset into an image processing model to perform processing, to obtain a processing result corresponding to the image data, where parameters of n1 neurons are scaled up and parameters of n2 neurons are scaled down in the image processing model, and n1 and n2 are positive integers.

The calculation unit is configured to calculate an error between an annotation result of the image data in the training dataset and the processing result.

The adjustment unit is configured to adjust parameters of the image processing model based on the error between the annotation result and the processing result.

In a possible design, the image processing model is a model based on a neural network architecture, the neural network architecture includes M neural network layers, and the M neural network layers include an input layer, a hidden layer, and an output layer; and

parameters of n1 neurons at m neural network layers in the image processing model are scaled up, and parameters of n2 neurons at the m neural network layers are scaled down, where
M and m are positive integers, and m is less than or equal to M.

In a possible design, the apparatus further includes:

a scaling unit, configured to: determine a scaling ratio and a scaling multiple of each of the m neural network layers, where the scaling multiple includes a scale-down multiple and a scale-up multiple; determine, based on the scaling ratio of each of the m neural network layers, neurons with to-be-scaled-up parameters and neurons with to-be-scaled-down parameters at each neural network layer, where n1 is a total quantity of the neurons with to-be-scaled-up parameters at each neural network layer, and n2 is a total quantity of the neurons with to-be-scaled-down parameters at each neural network layer; and scale up parameters of the neurons with to-be-scaled-up parameters at each neural network layer based on the scale-up multiple of each of the m neural network layers; and scale down parameters of the neurons with to-be-scaled-down parameters at each neural network layer based on the scale-down multiple of each neural network layer.

In a possible design, each of the m neural network layers includes at least one group of neurons with to-be-scaled-up parameters and at least one group of neurons with to-be-scaled-down parameters, and the at least one group of neurons with to-be-scaled-up parameters and the at least one group of neurons with to-be-scaled-down parameters form N groups of neurons; and the scaling unit is specifically configured to: scale up parameters of neurons in each group of neurons with to-be-scaled-up parameters based on a scale-up multiple corresponding to each group of neurons with to-be-scaled-up parameters at each neural network layer; and scale down parameters of neurons in each group of neurons with to-be-scaled-down parameters based on a scale-down multiple corresponding to each group of neurons with to-be-scaled-down parameters at each neural network layer.

In a possible design, each of the N groups of neurons has a same quantity of neurons, and meets the following condition: N is a sum of the scale-up multiple corresponding to each group of neurons with to-be-scaled-up parameters and the scale-down multiple corresponding to each group of neurons with to-be-scaled-down parameters.

In a possible design, each of the N groups of neurons has different quantities of neurons, and meets the following condition: N is a sum of a scale-up multiple of all neurons in each group of neurons with to-be-scaled-up parameters and a scale-down multiple of all neurons in each group of neurons with to-be-scaled-down parameters, where the scale-up multiple of all the neurons in each group of neurons with to-be-scaled-up parameters is a product of a quantity of each group of neurons with to-be-scaled-up parameters and a corresponding scale-up multiple, and the scale-down multiple of all the neurons in each group of neurons with to-be-scaled-down parameters is a product of a quantity of each group of neurons with to-be-scaled-down parameters and a corresponding scale-down multiple.

In a possible design, the image data is all or a portion of image data in the training dataset.

In a possible design, the apparatus further includes:

a restoration unit, configured to: scale down the parameters of the n1 neurons; and/or scale up the parameters of the n2 neurons.

According to a third aspect, an embodiment of this application provides an image processing model training apparatus. The apparatus may have functions of implementing any one of the first aspect or the possible designs of the first aspect. The functions of the image processing model training apparatus may be implemented by hardware, or may be implemented by hardware executing corresponding software. The hardware or the software includes one or more modules corresponding to the functions.

A structure of the apparatus includes at least one processor, and may further include at least one memory. The at least one processor is coupled to the at least one memory, and may be configured to execute computer program instructions stored in the memory, so that the apparatus performs the method in any one of the first aspect or the possible designs of the first aspect. Optionally, the apparatus further includes a communication interface, and the processor is coupled to the communication interface. When the apparatus is a server, the communication interface may be a transceiver or an input/output interface; or when the apparatus is a chip included in a server, the communication interface may be an input/output interface of the chip. Optionally, the transceiver may be a transceiver circuit, and the input/output interface may be an input/output circuit.

According to a fourth aspect, an embodiment of this application provides a chip system, including a processor. The processor is coupled to a memory, the memory is configured to store a program or instructions, and when the program or the instructions are executed by the processor, the chip system is enabled to implement the method in any one of the first aspect or the possible designs of the first aspect.

Optionally, the chip system further includes an interface circuit, and the interface circuit is configured to receive code instructions and transmit the code instructions to the processor.

Optionally, there may be one or more processors in the chip system, and the processor may be implemented by hardware or software. When being implemented by the hardware, the processor may be a logic circuit, an integrated circuit, or the like. When being implemented by the software, the processor may be a general-purpose processor, and is implemented by reading software code stored in the memory.

Optionally, there may alternatively be one or more memories in the chip system. The memory may be integrated with the processor, or may be separated from the processor. This is not limited in this application. For example, the memory may be a non-transitory processor, for example, a read-only memory ROM. The memory and the processor may be integrated on a same chip, or may be respectively disposed on different chips. A type of the memory and a manner of disposing the memory and the processor are not specifically limited in this application.

According to a fifth aspect, an embodiment of this application provides a readable storage medium, storing a computer program or instructions. When executing the computer program or the instructions, a computer is enabled to perform the method in any one of the first aspect or the possible designs of the first aspect.

According to a sixth aspect, an embodiment of this application provides a computer program product. When a computer reads and executes the computer program product, the computer is enabled to perform the method in any one of the first aspect or the possible designs of the first aspect.

**BRIEF DESCRIPTION OF DRAWINGS**

FIG. 1 is a schematic diagram of an architecture of an image processing model according to an embodiment of this application;

FIG. 2 is a schematic diagram of an architecture of an image processing model to which a dropout method is applied;

FIG. 3 is a schematic diagram of a structure of a training device according to an embodiment of this application;

FIG. 4 is a schematic flowchart of training an image processing model according to an embodiment of this application;

FIG. 5 is a schematic diagram of a structure of a neural network according to an embodiment of this application;

FIG. 6 is a schematic diagram of a structure of a CNN-based image classification model according to an embodiment of this application;

FIG. 7 is a schematic diagram of a structure of a VGG-based image classification model according to an embodiment of this application;

FIG. 8 is a schematic diagram of image classification according to an embodiment of this application;

FIG. 9 is a schematic flowchart of vehicle detection according to an embodiment of this application;

FIG. 10 is a schematic diagram of vehicle detection according to an embodiment of this application;

FIG. 11 is a schematic diagram of a structure of a 3D CNN according to an embodiment of this application;

FIG. 12 is a schematic flowchart of training an image processing model according to an embodiment of this application;

FIG. 13 is a schematic diagram of a structure of an image processing model training apparatus according to an embodiment of this application; and

FIG. 14 is another schematic diagram of a structure of an image processing model training apparatus according to an embodiment of this application.

**DESCRIPTION OF EMBODIMENTS**

This application provides an image processing model training method and apparatus, to better suppress overfitting generated during training of an image processing model, and improve accuracy of the image processing model. The method and the apparatus are based on a same technical idea. Because the method and the apparatus have similar principles for resolving this problem, mutual reference may be made to implementations of the apparatus and the method, and repeated parts are not described again.

The following explains and describes a part of embodiments of this application, to facilitate understanding by a person skilled in the art.

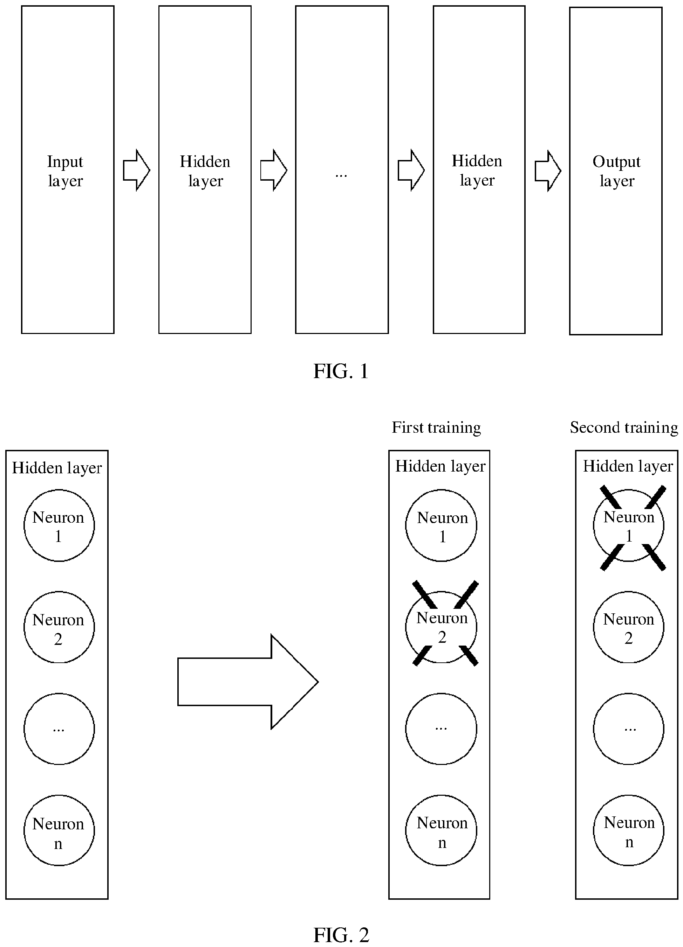

(1) An image processing model is used to process images, for example, perform processing such as detection, classification, and partitioning. The image processing model is generally a model based on a neural network (neural network, NN) architecture. The image processing model includes a plurality of neural network layers, and the neural network layer includes an input layer, an output layer, and a hidden layer. There are one or more input layers, output layers, and hidden layers. For example, as shown in FIG. 1, the image processing model includes one input layer, a plurality of hidden layers, and one output layer. Each neural network layer includes a plurality of neurons, a linear operator, and a nonlinear excitation function. The linear operator includes a plurality of weights (weight) and one bias (bias). In this embodiment of this application, the weight is also referred to as w, and the bias is also referred to as a. The nonlinear excitation function includes one or more of a Sigmoid function or a rectified linear unit (rectified linear unit, ReLU) function.

(2) Parameters of a neuron include a weight and/or a bias, and each neuron includes a group of corresponding parameters. The image processing model may be trained by training the parameters of the neuron in the image processing model.

(3) A neural network includes a feedforward neural network (feedforward neural network, FNN), a convolutional neural network (convolutional neural network, CNN), a recurrent neural network (recurrent neural network, RNN), an auto encoder (auto encoder, AE), a generative adversarial network (generative adversarial network, GAN), and the like.

(4) Training data and test data. The training data is used to train the image processing model. In this embodiment of this application, the training data is also referred to as sample data, and the test data is used to verify the accuracy of the image processing model. Optionally, both the training data and the test data are annotated with results.

During one training of the image processing model, all or a portion of training data may be used for training. The one training performed by using all the training data may be referred to as one epoch (epoch) of training. The one training performed by using a portion of training data may be referred to as one batch (batch) of training. For example, all the training data may be divided into a plurality of portions in advance, and a portion of training data is referred to as a batch of data.

(5) Underfitting (underfit) and overfitting (overfit). The underfitting means that the image processing model cannot well fit an annotation result of the training data. The overfitting means that the image processing model can well fit the annotation result of the training data, but cannot fit an annotation result of the test data. In addition, more times the image processing model is trained indicates better fitting on the training data and worse fitting on the test data.

(6) Scaling ratio is a ratio of a quantity of neurons that need to be scaled (parameters) to a quantity of all neurons at each neural network layer at which parameters need to be scaled.

Scaling multiple includes a scale-up multiple of neurons that need to be scaled up (parameters) and a scale-down multiple of neurons that need to be scaled down (parameters) at each neural network layer at which parameters need to be scaled.

The term "and/or" in this application describes an association relationship between associated objects and represents that three relationships may exist. For example, A and/or B may represent the following three cases: Only A exists, both A and B exist, and only B exists. The character "/" generally indicates an "or" relationship between the associated objects.

"A plurality of" in this application means two or more.

In addition, it should be understood that in description of this application, terms such as "first" and "second" are merely used for distinguishing and description, but should not be understood as indicating or implying relative importance, or should not be understood as indicating or implying a sequence.

For ease of understanding of the embodiments of this application, an application scenario used in this application is described.

During training of the image processing model, supervised learning is used as an example. Training data in a training dataset is annotated with a result. That is, the training dataset includes the training data and the annotation result corresponding to the training data. A training device inputs the training data into the image processing model to perform processing. The image processing model calculates an output result of the training data, and adjusts parameters of neurons in the image processing model based on an error between the annotation result of the training data and the output result of the image processing model. When the output result of the image processing model is close to or equal to the annotation result of the training data, the training device determines that the training of the image processing model is completed.

After the training is completed, the training device verifies accuracy of the trained image processing model by using test data in an actual scenario. During verification, underfitting and overfitting may occur. The purpose of training the image processing model is to enable that the image processing model may correctly predict a result of input data. However, both the underfitting and the overfitting affect accuracy of the predicted result. The underfitting may generally be resolved by increasing a quantity of neural network layers in the image processing model and/or increasing a quantity of neurons at the neural network layer.

For the overfitting, a dropout (dropout) method is provided in the conventional technology. Before the training of the image processing model, the training device determines a dropout rate, and determines, based on the dropout rate and a first quantity of neurons at the hidden layer, a second quantity of neurons that need to be dropped at the hidden layer. During training of the image processing model, the training device randomly selects a second quantity of neurons at the hidden layer to drop, that is, randomly selects a second quantity of neurons not participating in current training. The dropout method can improve a generalization capability of the image processing model. In other words, after some neurons at a hidden layer are dropped, interference may be increased to an input of a next hidden layer of the hidden layer. In this way, an anti-interference capability of the image processing model can be improved, to suppress the overfitting. For example, as shown in FIG. 2, a hidden layer of the image processing model includes a total of n neurons: a neuron 1, a neuron 2, ..., and a neuron n. During first training, the training device randomly drops several neurons, for example, drops the neuron 2 at the hidden layer. During second training, the training device randomly drops several neurons, for example, drops the neuron 1 at the hidden layer.

However, for a hidden layer with a small quantity of neurons, if some neurons at the hidden layer are dropped, underfitting easily occurs in the image processing model. In addition, because a quantity of neurons participating in training at the hidden layer decreases during each training, more training times may be required, thereby affecting training efficiency of the image processing model. However, if a quantity of training times does not increase during training, the overfitting cannot be well suppressed.

In view of this, this application provides an image processing model training method and apparatus, to better suppress the overfitting. In the method, before training of the image processing model, the training device determines a scaling ratio and a scaling multiple. During training of the image processing model, the training device determines, based on the scaling ratio, a quantity of neurons that need to be scaled at each neural network layer, scales up, based on a scale-up multiple in the scaling multiple, parameters of neurons that need to be scaled up, and scales down, based on a scale-down multiple in the scaling multiple, parameters of neurons that need to be scaled down. In this way, scaling up and scaling down the parameters of the neurons is equivalent to scrambling the training data input into the neural network layer, so that an anti-interference capability of the image processing model can be improved, to suppress the overfitting. In addition, in this application, because a quantity of neurons at the neural network layer does not change during each training, a quantity of training times does not need to be increased. In this way, the overfitting can be suppressed, and the training efficiency of the image processing model can also be ensured.

In this embodiment of this application, the image processing model training method provided in this application is also referred to as a scaleout (Scaleout) method.

The following further describes the embodiments of this application in detail with reference to the accompanying drawings.

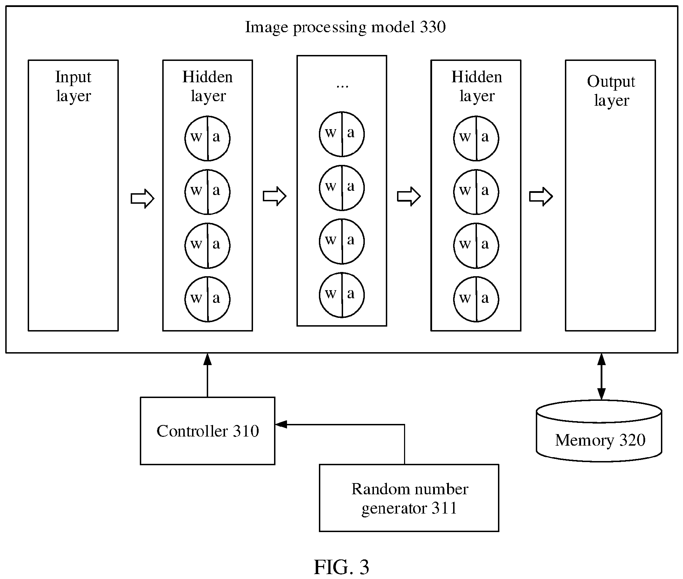

FIG. 3 is a schematic diagram of a structure of a possible training device according to an embodiment of this application. The training device 300 may include a controller 310, a memory 320, and an image processing model 330. The controller 310 includes a random number generator 311.

The image processing model 330 is used to process images. The image processing model 330 includes one input layer, a plurality of hidden layers, and one output layer. Each hidden layer includes a plurality of neurons, each neuron includes a group of corresponding parameters, and the parameters of the neuron includes a weight w and a bias a. In the scaleout method provided in this application, the parameters of the neuron at the hidden layer in the image processing model 330 are scaled, and then the image processing model 330 is trained. The trained image processing model 330 may process an input image, and output a processing result, to suppress the overfitting.

For example, the image processing model 330 is a model based on an FNN structure, and the overfitting can be suppressed by scaling parameters of a neuron at a fully connected (fully connected, FC) hidden layer of the image processing model 330. A quantity of neurons at each fully connected hidden layer is not limited in this application. For example, a relatively small quantity of neurons such as 16 or 32 may be included, or a relatively large quantity of neurons such as 1024 or 2048 may be included.

In another example, the image processing model 330 is a model based on a CNN structure, and the overfitting can be suppressed by scaling parameters of a neuron at a fully connected layer of the image processing model 330. Because the CNN structure has a powerful image processing capability, the image processing model 330 based on the CNN structure can achieve good processing effects in all aspects of image classification, object detection, semantic/instance segmentation, face detection, face recognition, and image quality enhancement.

FIG. 3 uses an example in which the parameters of the neuron at the hidden layer are scaled. In an actual possible scenario, parameters of a neuron at the input layer and/or the output layer may be further scaled. This is not limited in this application.

The memory 320 is configured to store data related to a training process of the image processing model 330, for example, including but not limited to one or more pieces of the following data: a training dataset (where the training dataset includes training data and an annotation result corresponding to the training data), a quantity of neural network layers, a quantity of neurons at each neural network layer, a first parameter of each neuron before each training, a scaling ratio and a scaling multiple, and which neurons whose parameters are scaled up and which neurons whose parameters are scaled down before each training. For example, the training data of the image processing model includes image data, and the annotation result corresponding to the training data includes an annotation result (for example, an annotation box) for an object object in the image data.

For each neural network layer at which parameters need to be scaled, different neural network layers may use a same group of a scaling ratio and a scaling multiple, or different neural network layers may use a scaling ratio and a scaling parameter corresponding to each layer. In addition, optionally, the scaling ratio and the scaling multiple remain unchanged during each training, or are adjusted during each training. For example, the scaling ratio and the scaling multiple decrease as a quantity of training times increases.

The scaling ratio ratio meets the following condition: $b < ratio \leq c$, where ratio represents the scaling ratio, $b \geq 0$, and $c < 1$. b and c may be specified values, or may be values selected based on an experimental result or an actual use requirement. For example, b is 0, 0.1, 0.3, or the like, and c is 0.3, 0.5, 0.9, or the like. In a possible implementation, for each neural network layer at which parameters need to be scaled, a quantity of neurons that need to be scaled up at the neural network layer is equal to a quantity of neurons that need to be scaled down at the neural network layer. To be specific, for each neural network layer at which the parameters need to be scaled, the following condition is met: $num1 = num2 = M \cdot ratio$, where M represents a quantity of all neurons at the neural network layer, num1 represents a quantity of neurons that need to be scaled up at the neural network layer, and num2 represents a quantity of neurons that need to be scaled down at the neural network layer.

The scaling multiple includes a scale-up multiple X or a scale-down multiple Y. The scale-up multiple X meets the following condition: $d < X < e$, $d > 1$, $e > 1$, and $e > d$. The scale-down multiple Y meets the following condition: $Y = f - X$, where Y represents the scale-down multiple, and $f \geq e$. d, e, and f may be specified values, or may be values selected based on an experimental result or an actual use requirement. For example, d may be 1, 1.5, 1.9, or the like, e may be 1.5, 1.7, 2, or the like, and f may be 2, 5, or the like.

For example, for the image processing model 330 based on the FNN structure, the scaling ratio may be set in an interval between (0, 0.5]. For example, the scaling ratio may be set to 0.1, 0.2, ..., or 0.5. In a possible implementation, when the scaling ratio is set to a different value, a comparative experiment is performed. For example, when the scaling ratio is set in an interval between [0.3, 0.5], the overfitting is better suppressed. In another example, when the scaling ratio is less than 0.5, an error rate for the image processing model is relatively stable. Therefore, the scaling ratio may be set based on different requirements. The scale-up multiple may be set in an interval between (1, 2). For example, the scale-up multiple may be set to 1.1, 1.2, 1.3, ..., or 1.9. In a possible implementation, when the scale-up multiple is set to a different value, a comparative experiment is performed. For example, when the scale-up multiple is set in an interval between [1.5, 1.7], the overfitting is better suppressed. In another example, when the scale-up multiple is less than 1.5, an error rate for the image processing model is relatively stable. Therefore, the scaling multiple may be set based on different requirements. In addition, the scale-down multiple is determined.

In another example, for the image processing model 330 based on the CNN structure, the scaling ratio may be set in an interval between [0.1, 0.5]. For example, the scaling ratio may be set to 0.5. The scale-up multiple may be set in an interval between [1.1, 1.9]. For example, the scale-up multiple may be set to 1.7. If f is 2, the scale-down multiple is 2-1.7=0.3.

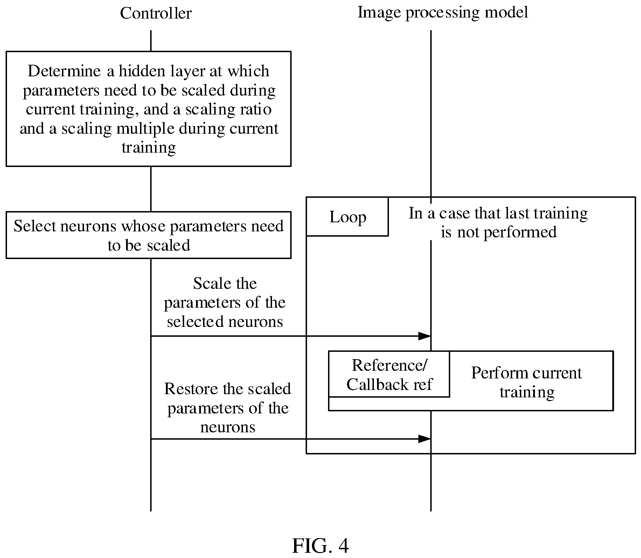

The controller 310 is configured to control a training process of the image processing model 330. For the training process of the image processing model 330 controlled by the controller 310, refer to FIG. 4.

Before each training, the controller 310 determines a hidden layer at which parameters need to be scaled during current training, and determines a scaling ratio and a scaling multiple during current training. During each training, the hidden layer at which the parameters need to be scaled may be preset, or may be randomly selected by controlling the random number generator 311 by the controller 310.

The controller 310 controls, based on the scaling ratio, the random number generator 311 to randomly select, from the hidden layer at which the parameters need to be scaled, neurons whose parameters need to be scaled. For each hidden layer, a quantity of neurons whose parameters need to be scaled up at the layer=a quantity of all neurons at the layer*the scaling ratio. At each layer, a quantity of neurons whose parameters need to be scaled up is equal to a quantity of neurons whose parameters need to be scaled down.

In a possible implementation, the random number generator 311 selects, in a unit of a group from the hidden layer that needs to be scaled, neurons whose parameters need to be scaled, for example, selects a total of N groups of neurons, where N1 groups of neurons include neurons whose parameters need to be scaled up, N2 groups of neurons include neurons whose parameters need to be scaled down, N=N1+N2, and N, N1, and N2 are all positive integers. Optionally, each group of neurons may include a same quantity or different quantities of neurons. For example, each of the N groups of neurons includes different quantities of neurons, and the quantities of neurons included in each group of neurons are $g_1$, $g_2$, ..., and $g_n$ respectively. In addition, optionally, each group of neurons may correspond to different scaling multiples. For example, each of the N groups of neurons corresponds to scaling multiples: $t_1$, $t_2$, ..., and $t_n$, and n is an integer greater than or equal to 1 and less than or equal to N.

If each group of neurons includes a same quantity of neurons, a quantity of neurons included in the N groups of neurons meets: $g \times N \leq M$. g is the quantity of neurons included in each group of neurons, N is a quantity of groups of neurons, and M is a quantity of all neurons at a layer. The scaling multiples corresponding to each group of neurons meet: $t_1+t_2+...+t_n=N$, and $t_1$, $t_2$, ..., and $t_n$ are the scaling multiples corresponding to each group of neurons.

If each group of neurons includes different quantities of neurons, a quantity of neurons included in the N groups of neurons meets: $\sum_{i=1}^{N} g_i \leq M$. i is an integer greater than or equal to 1 and less than or equal to N, and represents an $i^{th}$ group of neurons, and $g_i$ is a quantity of neurons included in the $i^{th}$ group of neurons. The scaling multiple corresponding to each group of neurons meets: $\sum_{i=1}^{N} g_i \times t_i = N$, and $t_i$ is a scaling multiple corresponding to the $i^{th}$ group of neurons.

Before each training, the controller 310 scales up, based on a scale-up multiple corresponding to current training, parameters of neurons that need to be scaled up during current training, and scales down, based on a scale-down multiple corresponding to the current training, parameters of neurons that need to be scaled down during current training.

During each training, the controller 310 inputs training data into the image processing model 330 whose parameters have been scaled, to obtain a processing result of the image processing model 330, and calculates an error between the processing result and an annotation result of the training data. The controller 310 adjusts the parameters for the image processing model 330 based on the error between the processing result and the annotation result of the training data. In a possible implementation, each batch of training data is used as training data required for one training.

After each training ends, the controller 310 restores the parameters of the neurons scaled during current training. In a possible implementation, the controller 310 obtains a first parameter of each neuron before the current training, and resets parameters of a neuron scaled during current training to a first parameter corresponding to each scaled neuron. In another possible implementation, parameters of a scaled-up neuron during current training are divided by the scale-up multiple for scaling-down, and parameters of a scaled-down neuron during current training are divided by the scale-down multiple for scaling-up. Optionally, when restoring the parameters of the neuron, the controller 310 may restore only the parameters of the scaled-up neuron, or may restore only the parameters of the scaled-down neuron.

The image processing model 330 is a model based on a neural network architecture. During training of the neural network, a forward pass (forward pass) and a back pass (back pass) are included. During training of the image processing model 330, the scaleout method provided in this application may be used only in the forward pass. That is, the parameters of the neuron are scaled before the forward pass, and correspondingly the parameters of the neuron are restored after the forward pass and before the back pass. Alternatively, the scaleout method provided in this application may be used only in the back pass. That is, the parameters of the neuron are scaled after the forward pass and before the back pass, and correspondingly the parameters of the neuron are restored after the back pass. Alternatively, the scaleout method provided in this application may be used in both the forward pass and the back pass.

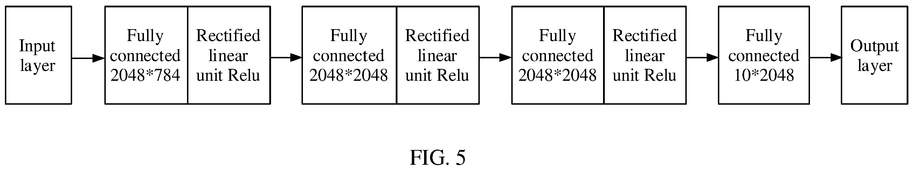

For example, for the image processing model 330 based on the FNN structure, a possible structure of a neural network shown in FIG. 5 is used as an example, including one input layer, one output layer, and four fully connected layers. The four hidden layers respectively include: a fully connected+Relu layer at which a quantity of neurons is 2048*784, a fully connected+Relu layer at which a quantity of neurons is 2048*2048, a fully connected+Relu layer at which a quantity of neurons is 2048*2048, and a fully connected layer at which a quantity of neurons is 10*2048. For example, parameters of neurons at the first three fully connected layers are scaled. A comparative experiment is performed between the scaleout method provided in this application and the dropout (dropout) method in the conventional technology, and shows based on an experimental result that, compared with the dropout method, the scaleout method provided in this application can effectively reduce a quantity of training times, improve training efficiency, significantly reduce an error rate of the image processing model, and better suppress overfitting.

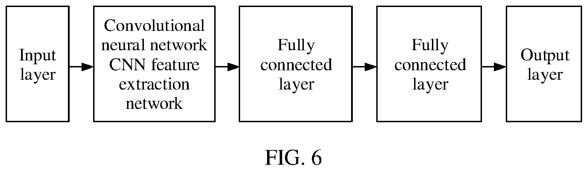

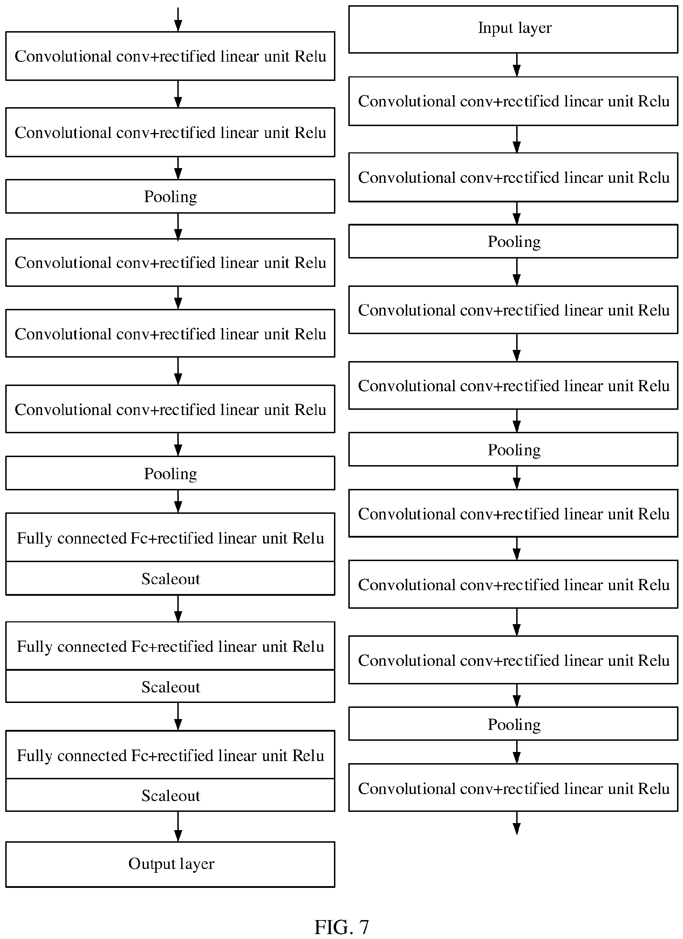

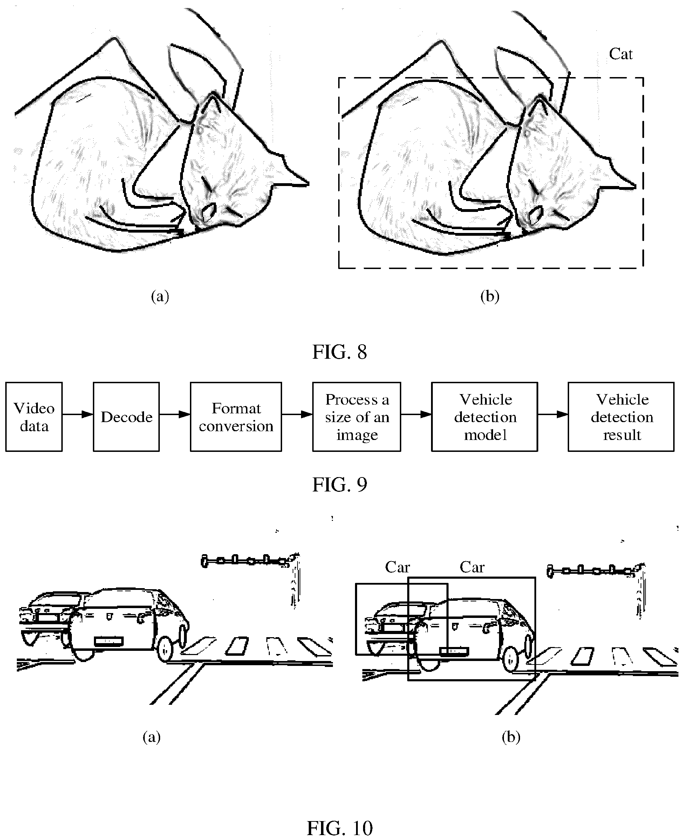

In another example, for the image processing model 330 based on the CNN structure, FIG. 6 shows a possible structure of a CNN-based image classification model, including an input layer (an image is input through the input layer), a CNN feature extraction network, one or more fully connected layers (where two fully connected layers are shown in FIG. 6), and an output layer (the output layer outputs a classification result). The CNN feature extraction network includes: Alexnet, VGG, GoogleNet, Resnet, Densenet, Mobilenet, SeNet, Shuffnet, or the like. FIG. 7 shows a possible structure of a VGG-based image classification model, including an input layer, two convolutional (conv)+relu layers, a pooling (pooling) layer, two conv+relu layers, a pooling layer, three conv+relu layers, a pooling layer, three conv+relu layers, a pooling layer, three conv+relu layers, a pooling layer, three Fc+Relu layers, and an output layer. For example, a scaling ratio is set to 0.5, a scale-up multiple is set to 1.7, a scale-down multiple is set to 0.3, and parameters of neurons at the last three Fc+Relu layers of the VGG-based image classification model are scaled, to train the VGG-based image classification model. A to-be-classified first image shown in (a) in FIG. 8 is input into a trained VGG-based image classification model to perform processing, and the trained VGG-based image classification model outputs a processing result of the first image. The processing result of the first image includes a classification result annotated for an object in the first image. As shown in (b) in FIG. 8, the object in the first image is annotated with an annotation box, and the classification result of the object is identified as a "cat". That the VGG-based image classification model classifies animals is used for description. If underfitting exists in the trained VGG-based image classification model, the VGG-based image classification model cannot recognize information about the animals. If overfitting exists in the trained VGG-based image classification model, the VGG-based image classification model cannot accurately classify animals of different types, or animals of a same type with different appearances, resulting in poor adaptability of the VGG-based image classification model.

A CNN-based object detection model is used as an example. The object detection model includes Faster R-CNN, R-FCN, SSD, or the like. A Faster R-CNN-based object detection model is used as an example. A scaling ratio is set to 0.5, a scale-up multiple is set to 1.7, and a scale-down multiple is set to 0.3. If the Faster R-CNN-based object detection model includes two Fc+ReLU layers, and each Fc+ReLU layer includes 1024 neurons. For each Fc+ReLU layer, a quantity of neurons that need to be scaled up at the Fc+ReLU layer is 512, and a quantity of neurons that need to be scaled down is 512. During training of the Faster R-CNN-based object detection model, for each Fc+ReLU layer, 512 neurons are randomly selected from the Fc+ReLU layer as neurons that need to be scaled up, 512 neurons are randomly selected as neurons that need to be scaled down, parameters of the 512 neurons that need to be scaled up are scaled up by 1.7 times, and parameters of the 512 neurons that need to be scaled down are scaled down by 0.3 times.

Generally, for vehicle detection, if the underfitting exists in the trained object detection model, vehicle information may not be recognized from an image. Conversely, if the overfitting exists in the trained object detection model, a model applicable to a vehicle A may be inaccurate for a vehicle B due to poor adaptability. Therefore, the foregoing model may be further applied to the field of intelligent monitoring or the field of autonomous driving, to more accurately recognize the vehicle information.

For example, the Faster R-CNN-based object detection model detects a vehicle. FIG. 9 is a possible schematic flowchart of vehicle detection. A road monitoring camera is mounted at a traffic intersection, and is configured to acquire a traffic status of the traffic intersection and information about a vehicle passing through the traffic intersection. The road monitoring camera sends acquired video data to a device for vehicle detection. The device for vehicle detection includes a trained vehicle detection model. The device for vehicle detection may be a server, a training device for training the vehicle detection model, or the like. The device receives the video data acquired by the road monitoring camera, decodes the video data, obtains a video image from the decoded video data, converts a format of each frame of video image (for example, converts to a blue green red (blue green red, BGR) format), and processes a size of each frame of video image after format conversion (for example, scales (scale) the video image and/or resizes (resize) the video image). For example, (a) in FIG. 10 shows a frame of video image obtained after size processing, which is referred to as a second image in this embodiment of this application. The device inputs the second image shown in (a) in FIG. 10 into the trained vehicle detection model to perform processing, and the trained vehicle detection model outputs a processing result of the second image. The processing result of the second image includes a detection result annotated for an object in the second image. As shown in (b) in FIG. 10, the object in the second image is annotated with an annotation box, and the detection result of the object is identified as a "car".

It should be understood that the vehicle detection model may detect whether there is a vehicle in the image, or may detect a type of a vehicle in the image. The type of the vehicle may include types such as a motor vehicle and a non-motor vehicle (as shown in (b) in FIG. 10, a vehicle is detected and the detected vehicle is a car), or may include types such as a manufacturer and a brand of the vehicle.

In addition, optionally, a plurality of road monitoring cameras may be linked. For example, a plurality of road monitoring cameras located in an area or on a specific driving route may be linked. Video data acquired by the plurality of linked road monitoring cameras may be shared. For example, a driving route may be intelligently provided for a vehicle based on a traffic status of each traffic intersection. Alternatively, the road monitoring camera may alternatively be connected to a public security transportation system. The public security transportation system may analyze a video image acquired by the road monitoring camera. For example, the public security transportation system may determine, based on an analysis result, whether a vehicle that passes through the traffic intersection at which the road monitoring camera is located has an illegal behavior, or may determine, based on the analysis result, whether traffic congestion exists at the traffic intersection at which the road monitoring camera is located, to notify a traffic police near the traffic intersection to assist in directing traffic.

In another possible scenario, for example, with rapid development of services such as short videos and live broadcast videos, how to better analyze video content that a user watches and is interested in, to provide the user with functions such as search and recommendation that better meet a requirement of the user is of great significance. A three-dimensional (3 Dimensions, 3D) CNN can achieve good effect in aspects such as video classification and action recognition. Different from the CNN that processes each frame of image in a video as a static picture, the 3D CNN can consider motion information between consecutive frames in the video during video processing, to better capture and analyze the motion information of the video in a time dimension and a space dimension. When the 3D CNN processes a video, a plurality of consecutive image frames in the video are stacked to form a cube in the 3D CNN. Because the plurality of image frames in the cube are continuous in time, motion information in the cube may be captured by using a 3D convolution kernel.

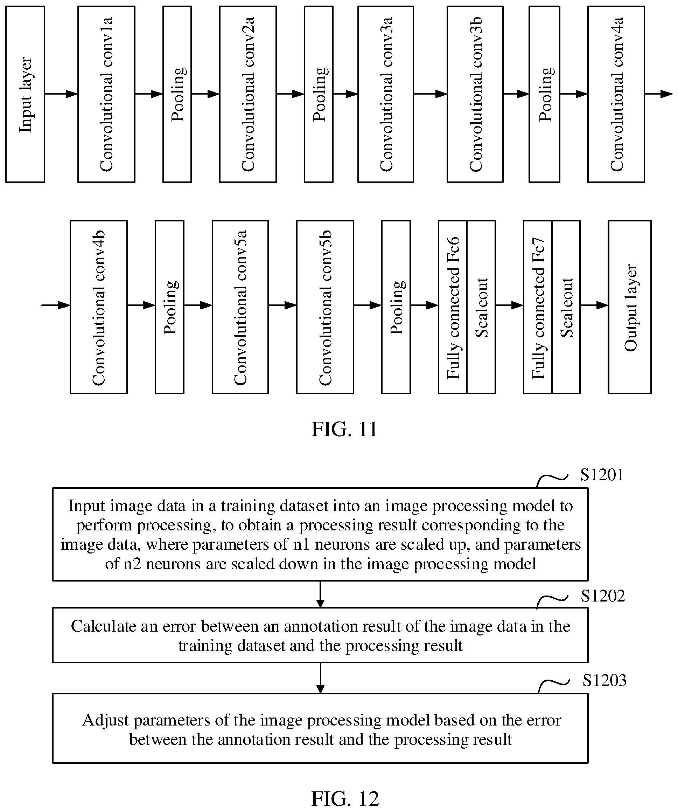

The 3D CNN may also be used in combination with the scaleout method provided in this application. FIG. 11 shows a possible 3D CNN architecture, including an input layer, a conv1a layer, a pooling layer, a conv2a layer, a pooling layer, a conv3a layer, a conv3b layer, a pooling layer, a conv4a layer, a conv4b layer, a pooling layer, a conv5a layer, a conv5b layer, a pooling layer, an Fc6 layer, an Fc7 layer, and an output layer. During training, parameters of neurons at the two fully connected layers: the Fc6 layer and the Fc7 layer are scaled. For example, a scaling ratio is set to 0.5, a scale-up multiple is set to 1.7, and a scale-down multiple is set to 0.3. The 3D CNN shown in FIG. 11 may be used to detect a highlight in a video. A to-be-detected video segment is input into a trained 3D CNN for processing, and the trained 3D CNN outputs a highlight score of the video segment.

It should be noted that FIG. 3 is merely a schematic diagram of a structure of a possible training device according to an embodiment of this application. A position relationship between the modules shown in the figure does not constitute any limitation. For example, in FIG. 3, the memory 320 is built in the training device, or may be an external memory in another case. The training device may be a device such as a personal computer (personal computer, PC), a notebook computer, or a server.

It may be understood that the scaleout method provided in this application may also be applied to automated machine learning (AutoML) or neural architecture search (neural architecture search, NAS). Compared with the dropout method, the scaleout method provided in this application requires fewer training times, and can also reduce time in attempting model search and training in a scenario in which the AutoML and the NAS need to attempt to use different hyperparameters for training for a plurality of times. During training of a natural language recognition model, a language recognition model, and another model, the scaleout method provided in this application may also be applied, to better suppress the overfitting.

In addition, the scaleout method provided in this application may also be used as a scaleout method operator for training a neural network model, and is provided for a tenant of a public cloud to use. In this way, when establishing a deep learning model of the tenant, the tenant of the public cloud may also train the deep learning model of the tenant by using the scaleout method operator for training the neural network model provided by the public cloud, to achieve a better effect.

With reference to the foregoing embodiments and accompanying drawings, as shown in FIG. 12, an embodiment of this application provides an image processing model training method. The method includes the following steps:

S1201: Input image data in a training dataset into an image processing model to perform processing, to obtain a processing result corresponding to the image data, where parameters of n1 neurons are scaled up and parameters of n2 neurons are scaled down in the image processing model, and n1 and n2 are positive integers.

Before S 1201, the image processing model training apparatus may further obtain a training dataset from a memory, and the training dataset includes image data. In a supervised learning scenario, the training dataset includes training data and an annotation result corresponding to the training data.

Optionally, the image data input into the image processing model in S1201 is all or a portion of image data in the training dataset. In other words, in one training of the image processing model, all or a portion of training data in the training dataset may be used for training. The one training performed by using all the training data in the training dataset may be referred to as one epoch of training, and the one training performed by using the portion of training data in the training dataset may be referred to as one batch of training.

The memory may be an internal memory. As shown in FIG. 3, the memory is built in the image processing model training apparatus, or the memory may be an external memory (for example, a hard disk, a floppy disk, or an optical disc).

For example, the image processing model is a model based on a neural network architecture, the neural network architecture includes M neural network layers, and the M neural network layers include an input layer, a hidden layer, and an output layer, where M is a positive integer.

In S1201, the parameters of the neurons at neural network layers in the image processing model are scaled. For example, there are m neural network layers at which parameters need to be scaled at the M neural network layers, parameters of n1 neurons at the m neural network layers in the image processing model are scaled up, and parameters of n2 neurons at the m neural network layers are scaled down, where m is a positive integer, and m is less than or equal to M.

In some embodiments, before S1201, the image processing model training apparatus may further determine a scaling ratio and a scaling multiple of each of the m neural network layers, where the scaling multiple includes a scale-down multiple and a scale-up multiple. The scaling ratio and the scaling multiple of each neural network layer may alternatively be stored in the memory.

The scaling ratio is a ratio of a quantity of neurons that need to be scaled to a quantity of all neurons at each of the m neural network layers at which the parameters need to be scaled. The image processing model training apparatus may determine neurons with to-be-scaled-up parameters and neurons with to-be-scaled-down parameters at each of the m neural network layers based on the scaling ratio of each neural network layer. In some embodiments, a quantity of neurons whose parameters need to be scaled up is equal to a quantity of neurons whose parameters need to be scaled down at each neural network layer. $n1=n2$, n1 is a total quantity of neurons with to-be-scaled-up parameters at each neural network layer, and n2 is a total quantity of neurons with to-be-scaled-down parameters at each neural network layer.

For example, the image processing model training apparatus may select, in a unit of a group from each of the m neural network layers, neurons that need to be scaled, for example, select a total of N groups of neurons. Each of the m neural network layers includes at least one group of neurons with to-be-scaled-up parameters and at least one group of neurons with to-be-scaled-down parameters, and the at least one group of neurons with to-be-scaled-up parameters and the at least one group of neurons with to-be-scaled-down parameters form N groups of neurons. Each of the N groups of neurons may have a same quantity or different quantities of neurons.

The scaling multiple includes a scale-up multiple of neurons whose parameters need to be scaled up and a scale-down multiple of neurons whose parameters need to be scaled down at each of the m neural network layers at which the parameters need to be scaled. The image processing model training apparatus may scale up parameters of the neurons with to-be-scaled-up parameters at each neural network layer based on the scale-up multiple of each of the m neural network layers; and scale down parameters of the neurons with to-be-scaled-down parameters at each neural network layer based on the scale-down multiple of each neural network layer.

For example, if the image processing model training apparatus selects N groups of neurons from each of the m neural network layers, the image processing model training apparatus may further determine, for each of the m neural network layers, a scale-up multiple corresponding to each group of neurons with to-be-scaled-up parameters at each neural network layer and a scale-down multiple corresponding to each group of neurons with to-be-scaled-down parameters at each neural network layer. In this way, when scaling the parameters of the neurons, the image processing model training apparatus may scale up parameters of neurons in each group of neurons with to-be-scaled-up parameters based on the scale-up multiple corresponding to each group of neurons with to-be-scaled-up parameters at each neural network layer, and scale down parameters of neurons in each group of neurons with to-be-scaled-down parameters based on the scale-down multiple corresponding to each group of neurons with to-be-scaled-down parameters at each neural network layer.

If the N groups of neurons have a same quantity of neurons, they meet the following condition: N is a sum of the scale-up multiple corresponding to each group of neurons with to-be-scaled-up parameters and the scale-down multiple corresponding to each group of neurons with to-be-scaled-down parameters.

If the N groups of neurons have different quantities of neurons, they meet the following condition: N is a sum of a scale-up multiple of all neurons in each group of neurons with to-be-scaled-up parameters and a scale-down multiple of all neurons in each group of neurons with to-be-scaled-down parameters. The scale-up multiple of all the neurons in each group of neurons with to-be-scaled-up parameters is a product of a quantity of each group of neurons with to-be-scaled-up parameters and a corresponding scale-up multiple, and the scale-down multiple of all the neurons in each group of neurons with to-be-scaled-down parameters is a product of a quantity of each group of neurons with to-be-scaled-down parameters and a corresponding scale-down multiple.

The processing result corresponding to the image data output in S1201 is a prediction value of the image processing model.

S 1202: Calculate an error between an annotation result of the image data in the training dataset and the processing result.

In some embodiments, the error between the annotation result of the image processing and the processing result may be calculated by using a loss function (loss function). Generally, if a higher output value (loss) of the function indicates a larger error, the training process of the image processing model becomes a process of reducing the loss as much as possible.

S1203: Adjust parameters of the image processing model based on the error between the annotation result and the processing result.

The image processing model training apparatus updates the parameters for the image processing model based on the error between the annotation result and the processing result, and completes training of the image processing model through continuous adjustment until the processing result of the image data predicted by the image processing model is close to or equal to the annotation result of the image data.

In addition, to suppress the overfitting, after adjusting the parameters for the image processing model this time, and before inputting the image data into the image processing model next time, the image processing model training apparatus may scale parameters of neurons in the image processing model based on the parameters for the image processing model adjusted this time.

Because the parameters of the neurons in the image processing model are scaled during current training, after adjusting the parameters for the image processing model, the image processing model training apparatus may further scale down the parameters of the n1 neurons; and/or scale up the parameters of the n2 neurons. For example, the parameters of the n1 neurons during current training are divided by a scale-up multiple corresponding to each neuron to perform scaling-down, and the parameters of the n2 neurons during current training are divided by a scale-down multiple corresponding to each neuron to perform scaling-up.

For a specific implementation shown in FIG. 12 in this embodiment of this application, refer to the descriptions of the foregoing related embodiments.

The embodiments in this application may be used in combination, or may be used separately.

FIG. 12 mainly describes the solutions provided in this application from a perspective of a method procedure. It should be understood that to implement the foregoing functions, the apparatus may include corresponding hardware structures and/or software modules for performing the functions. A person skilled in the art should be easily aware that, in combination with the examples of units and algorithm steps described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

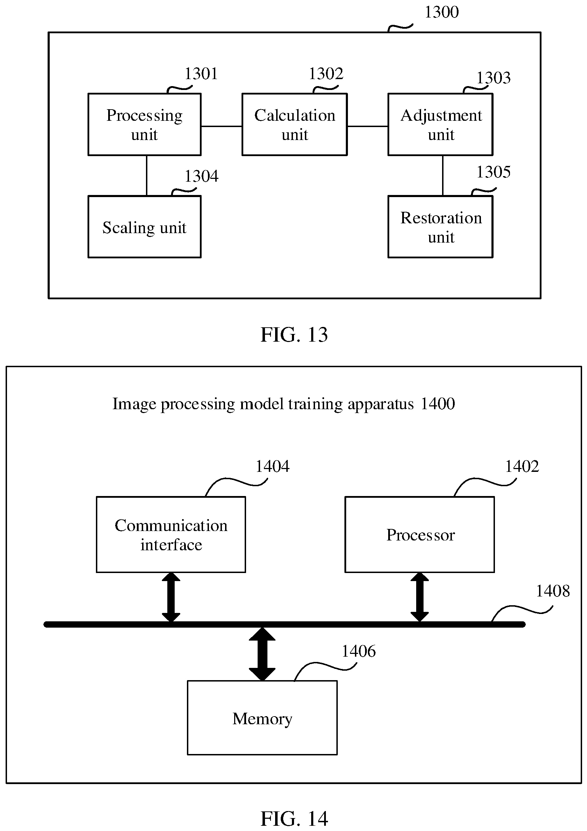

When an integrated unit is used, FIG. 13 is a possible exemplary block diagram of an image processing model training apparatus according to an embodiment of this application. The image processing model training apparatus 1300 may exist in the form of software. The image processing model training apparatus 1300 may include: a processing unit 1301, a calculation unit 1302, and an adjustment unit 1303.

The image processing model training apparatus 1300 may be the training device in FIG. 3, or may be a semiconductor chip disposed in the training device. Specifically, in an embodiment, the processing unit 1301 is configured to input image data in a training dataset into an image processing model to perform processing, to obtain a processing result corresponding to the image data, where parameters of n1 neurons are scaled up and parameters of n2 neurons are scaled down in the image processing model, and n1 and n2 are positive integers.

The calculation unit 1302 is configured to calculate an error between an annotation result of the image data in the training dataset and the processing result.

The adjustment unit 1303 is configured to adjust parameters of the image processing model based on the error between the annotation result and the processing result.

In a possible design, the image processing model is a model based on a neural network architecture, the neural network architecture includes M neural network layers, and the M neural network layers include an input layer, a hidden layer, and an output layer; and

> parameters of n1 neurons at m neural network layers in the image processing model are scaled up, and parameters of n2 neurons at the m neural network layers are scaled down, where
> M and m are positive integers, and m is less than or equal to M.

In a possible design, the apparatus further includes:
a scaling unit 1304, configured to: determine a scaling ratio and a scaling multiple of each of the m neural network layers, where the scaling multiple includes a scale-down multiple and a scale-up multiple; determine, based on the scaling ratio of each of the m neural network layers, neurons with to-be-scaled-up parameters and neurons with to-be-scaled-down parameters at each neural network layer, where n1 is a total quantity of the neurons with to-be-scaled-up parameters at each neural network layer, and n2 is a total quantity of the neurons with to-be-scaled-down parameters at each neural network layer; and scale up parameters of the neurons with to-be-scaled-up parameters at each neural network layer based on the scale-up multiple of each of the m neural network layers; and scale down parameters of the neurons with to-be-scaled-down parameters at each neural network layer based on the scale-down multiple of each neural network layer.

In a possible design, each of the m neural network layers includes at least one group of neurons with to-be-scaled-up parameters and at least one group of neurons with to-be-scaled-down parameters, and the at least one group of neurons with to-be-scaled-up parameters and the at least one group of neurons with to-be-scaled-down parameters form N groups of neurons; and the scaling unit 1304 is specifically configured to: scale up parameters of neurons in each group of neurons with to-be-scaled-up parameters based on a scale-up multiple corresponding to each group of neurons with to-be-scaled-up parameters at each neural network layer; and scale down parameters of neurons in each group of neurons with to-be-scaled-down parameters based on a scale-down multiple corresponding to each group of neurons with to-be-scaled-down parameters at each neural network layer.

In a possible design, each of the N groups of neurons has a same quantity of neurons, and meets the following condition: N is a sum of the scale-up multiple corresponding to each group of neurons with to-be-scaled-up parameters and the scale-down multiple corresponding to each group of neurons with to-be-scaled-down parameters.

In a possible design, each of the N groups of neurons has different quantities of neurons, and meets the following condition: N is a sum of a scale-up multiple of all neurons in each group of neurons with to-be-scaled-up parameters and a scale-down multiple of all neurons in each group of neurons with to-be-scaled-down parameters, where the scale-up multiple of all the neurons in each group of neurons with to-be-scaled-up parameters is a product of a quantity of each group of neurons with to-be-scaled-up parameters and a corresponding scale-up multiple, and the scale-down multiple of all the neurons in each group of neurons with to-be-scaled-down parameters is a product of a quantity of each group of neurons with to-be-scaled-down parameters and a corresponding scale-down multiple.

In a possible design, the image data is all or a portion of image data in the training dataset.

In a possible design, the apparatus further includes:
a restoration unit 1305, configured to: scale down the parameters of the n1 neurons; and/or scale up the parameters of the n2 neurons.

In this embodiment of this application, division into the units is an example, and is merely logical function division. During actual implementation, another division manner may be used. The functional units in this embodiment of this application may be integrated into one processing module, each of the units may exist alone physically, or two or more units may be integrated into one unit. The integrated unit may be implemented in the form of hardware, or may be implemented in the form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, a network device, or the like) or a processor (processor) to perform all or some of the steps in the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or a compact disc.

As shown in FIG. 14, an embodiment of this application further provides another possible schematic diagram of a structure of an image processing model training apparatus. The image processing model training apparatus includes at least one processor 1402 and at least one communication interface 1404. Further, the image processing model training apparatus may further include a memory 1406, and the memory 1406 is configured to store a computer program or instructions. The memory 1406 may be a memory inside the processor, or may be a memory outside the processor. When the units and the modules described in FIG. 13 are implemented by software, software or program code required by the processing module 1402 to perform a corresponding action is stored in the memory 1406. The processor 1402 is configured to execute the program or the instructions in the memory 1406, to implement the steps shown in FIG. 12 in the foregoing embodiment. The communication interface 1404 is configured to implement communication between the apparatus and another apparatus.

When the memory 1406 is disposed outside the processor, the memory 1406, the processor 1402, and the communication interface 1404 are connected to each other by a bus 1408. The bus 1408 may be a peripheral component interconnect (peripheral component interconnect, PCI) bus, an extended industry standard architecture (extended industry standard architecture, EISA) bus, or the like. It should be understood that the bus may be classified into an address bus, a data bus, a control bus, or the like. For ease of representation, only one thick line is used to represent the bus in FIG. 14, but this does not mean that there is only one bus or only one type of bus.

It should be noted that operations and/or functions of the modules in the apparatus 1400 are separately used to implement corresponding procedures of the method shown in FIG. 12. For brevity, details are not described herein again.

An embodiment of this application further provides a chip system, including a processor. The processor is coupled to a memory, the memory is configured to store a program or instructions, and when the program or the instructions are executed by the processor, the chip system is enabled to implement the method in any one of the foregoing method embodiments.

Optionally, there may be one or more processors in the chip system. The processor may be implemented by hardware or software. When being implemented by the hardware, the processor may be a logic circuit, an integrated circuit, or the like. When being implemented by the software, the processor may be a general-purpose processor, and is implemented by reading software code stored in the memory.

Optionally, there may alternatively be one or more memories in the chip system. The memory may be integrated with the processor, or may be separated from the processor. This is not limited in this application. For example, the memory may be a non-transitory processor, for example, a read-only memory ROM. The memory and the processor may be integrated on a same chip, or may be respectively disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system on chip (system on chip, SoC), a central processing unit (central processor unit, CPU), a network processor (network processor, NP), a digital signal processor (digital signal processor, DSP), a microcontroller unit (micro controller unit, MCU), a programmable logic device (programmable logic device, PLD) or another integrated chip.

It should be understood that steps in the foregoing method embodiments may be completed by using a logic circuit in the form of hardware or instructions in the form of software in the processor. The steps of the methods according to embodiments of this application may be directly performed and completed by a hardware processor, or may be performed and completed by using a combination of hardware and software modules in the processor.

An embodiment of this application further provides a computer-readable storage medium, storing computer-readable instructions. When a computer reads and executes the computer-readable instructions, the computer is enabled to perform the method in any one of the foregoing method embodiments.

An embodiment of this application further provides a computer program product. When a computer reads and executes the computer program product, the computer is enabled to perform the method in any one of the foregoing method embodiments.

It should be understood that the processor mentioned in the embodiments of this application may be a central processing unit (central processing unit, CPU), or the processor may be another general-purpose processor, a digital signal processor (digital signal processor, DSP), an application-specific integrated circuit (application specific integrated circuit, ASIC), a field programmable gate array (field programmable gate array, FPGA), another programmable logic device, a discrete gate or transistor logic device, a discrete hardware component, or the like. The general-purpose processor may be a microprocessor, or the processor may be any conventional processor, or the like.

It should be further understood that the memory in embodiments of this application may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (storage module) is integrated into the processor.

It should be noted that the memory described in this specification aims to include but not limited to these memories and any memory of another appropriate type.

It should be understood that sequence numbers of the foregoing processes do not mean execution sequences in various embodiments of this application. The execution sequences of the processes should be determined based on functions and internal logic of the processes, and should not be construed as any limitation on implementation processes of the embodiments of the present invention.

A person of ordinary skill in the art may be aware that, with reference to the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separated, and components displayed as units may or may not be physical units, that is, may be located in one position, or may be distributed to a plurality of network units. Some or all of the units may be selected based on an actual requirement to achieve the objectives of the solutions in the embodiments.

In addition, the functional units in the embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in the form of a software product. The computer software product is stored in a storage medium, and includes several instructions for instructing a computer device (which may be a personal computer, a server, a network device, or the like) to perform all or some of the steps in the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An image processing model training method, comprising:

inputting image data in a training dataset into an image processing model to perform processing, to obtain a processing result corresponding to the image data, wherein parameters of n1 neurons are scaled up, and parameters of n2 neurons are scaled down in the image processing model;

calculating an error between an annotation result of the image data in the training dataset and the processing result; and

adjusting parameters of the image processing model based on the error between the annotation result and the processing result, wherein n1 and n2 are positive integers.

2. The method according to claim 1, wherein the image processing model is a model based on a neural network architecture, the neural network architecture comprises M neural network layers, and the M neural network layers comprise an input layer, a hidden layer, and an output layer; and

parameters of n1 neurons at m neural network layers in the image processing model are scaled up, and parameters of n2 neurons at the m neural network layers are scaled down, wherein M and m are positive integers, and m is less than or equal to M.

3. The method according to claim 2, wherein before the inputting image data in a training dataset into an image processing model to perform processing, the method further comprises:

determining a scaling ratio and a scaling multiple of each of the m neural network layers, wherein the scaling multiple comprises a scale-down multiple and a scale-up multiple;

determining, based on the scaling ratio of each of the m neural network layers, neurons with to-be-scaled-up parameters and neurons with to-be-scaled-down parameters at each neural network layer, wherein n1 is a total quantity of the neurons with to-be-scaled-up parameters at each neural network layer, and n2 is a total quantity of the neurons with to-be-scaled-down parameters at each neural network layer; and

scaling up parameters of the neurons with to-be-scaled-up parameters at each neural network layer based on the scale-up multiple of each of the m neural network layers; and scaling down parameters of the neurons with to-be-scaled-down parameters at each neural network layer based on the scale-down multiple of each neural network layer.

4. The method according to claim 3, wherein each of the m neural network layers comprises at least one group of neurons with to-be-scaled-up parameters and at least one group of neurons with to-be-scaled-down parameters, and the at least one group of neurons with to-be-scaled-up parameters and the at least one group of neurons with to-be-scaled-down parameters form N groups of neurons;

the scaling up parameters of the neurons with to-be-scaled-up parameters at each neural network layer based on the scale-up multiple of each of the m neural network layers comprises: scaling up parameters of neurons in each group of neurons with to-be-scaled-up parameters based on a scale-up multiple corresponding to each group of neurons with to-be-scaled-up parameters at each neural network layer; and

the scaling down parameters of the neurons with to-be-scaled-down parameters at each neural network layer based on the scale-down multiple of each neural network layer comprises: scaling down parameters of neurons in each group of neurons with to-be-scaled-down parameters based on a scale-down multiple corresponding to each group of neurons with to-be-scaled-down parameters at each neural network layer.

5. The method according to claim 4, wherein each of the N groups of neurons has a same quantity of neurons, and meets the following condition: N is a sum of the scale-up multiple corresponding to each group of neurons with to-be-scaled-up parameters and the scale-down multiple corresponding to each group of neurons with to-be-scaled-down parameters.

6. The method according to claim 4, wherein each of the N groups of neurons has different quantities of neurons, and meets the following condition: N is a sum of a scale-up multiple of all neurons in each group of neurons with to-be-scaled-up parameters and a scale-down multiple of all neurons in each group of neurons with to-be-scaled-down parameters, wherein the scale-up multiple of all the neurons in each group of neurons with to-be-scaled-up parameters is a product of a quantity of each group of neurons with to-be-scaled-up parameters and a corresponding scale-up multiple, and the scale-down multiple of all the neurons in each group of neurons with to-be-scaled-down parameters is a product of a quantity of each group of neurons with to-be-scaled-down parameters and a corresponding scale-down multiple.

7. The method according to any one of claims 1 to 6, wherein the image data is all or a portion of image data in the training dataset.

8. The method according to any one of claims 1 to 7, wherein after the adjusting parameters of the image processing model based on the error between the annotation result and the processing result, the method further comprises:

scaling down the parameters of the n1 neurons; and/or
scaling up the parameters of the n2 neurons.

9. An image processing model training apparatus, comprising:

a processing unit, configured to input image data in a training dataset into an image processing model to perform processing, to obtain a processing result corresponding to the image data, wherein parameters of n1 neurons are scaled up and parameters of n2 neurons are scaled down in the image processing model, and n1 and n2 are positive integers;
a calculation unit, configured to calculate an error between an annotation result of the image data in the training dataset and the processing result; and
an adjustment unit, configured to adjust parameters of the image processing model based on the error between the annotation result and the processing result.

10. The apparatus according to claim 9, wherein the image processing model is a model based on a neural network architecture, the neural network architecture comprises M neural network layers, and the M neural network layers comprise an input layer, a hidden layer, and an output layer; and

parameters of n1 neurons at m neural network layers in the image processing model are scaled up, and parameters of n2 neurons at the m neural network layers are scaled down, wherein M and m are positive integers, and m is less than or equal to M.

11. The apparatus according to claim 10, further comprising:
a scaling unit, configured to: determine a scaling ratio and a scaling multiple of each of the m neural network layers, wherein the scaling multiple comprises a scale-down multiple and a scale-up multiple; determine, based on the scaling ratio of each of the m neural network layers, neurons with to-be-scaled-up parameters and neurons with to-be-scaled-down parameters at each neural network layer, wherein n1 is a total quantity of the neurons with to-be-scaled-up parameters at each neural network layer, and n2 is a total quantity of the neurons with to-be-scaled-down parameters at each neural network layer; and scale up parameters of the neurons with to-be-scaled-up parameters at each neural network layer based on the scale-up multiple of each of the m neural network layers; and scale down parameters of the neurons with to-be-scaled-down parameters at each neural network layer based on the scale-down multiple of each neural network layer.

12. The apparatus according to claim 11, wherein each of the m neural network layers comprises at least one group of neurons with to-be-scaled-up parameters and at least one group of neurons with to-be-scaled-down parameters, and the at least one group of neurons with to-be-scaled-up parameters and the at least one group of neurons with to-be-scaled-down parameters form N groups of neurons; and the scaling unit is specifically configured to: scale up parameters of neurons in each group of neurons with to-be-scaled-up parameters based on a scale-up multiple corresponding to each group of neurons with to-be-scaled-up parameters at each neural network layer; and scale down parameters of neurons in each group of neurons with to-be-scaled-down parameters based on a scale-down multiple corresponding to each group of neurons with to-be-scaled-down parameters at each neural network layer.

13. The apparatus according to claim 12, wherein each of the N groups of neurons has a same quantity of neurons, and meets the following condition: N is a sum of the scale-up multiple corresponding to each group of neurons with to-be-scaled-up parameters and the scale-down multiple corresponding to each group of neurons with to-be-scaled-down parameters.

14. The apparatus according to claim 12, wherein each of the N groups of neurons has different quantities of neurons, and meets the following condition: N is a sum of a scale-up multiple of all neurons in each group of neurons with to-be-scaled-up parameters and a scale-down multiple of all neurons in each group of neurons with to-be-scaled-down parameters, wherein the scale-up multiple of all the neurons in each group of neurons with to-be-scaled-up parameters is a product of a quantity of each group of neurons with to-be-scaled-up parameters and a corresponding scale-up multiple, and the scale-down multiple of all the neurons in each group of neurons with to-be-scaled-down parameters is a product of a quantity of each group of neurons with to-be-scaled-down parameters and a corresponding scale-down multiple.

15. The apparatus according to any one of claims 9 to 14, wherein the image data is all or a portion of image data in the training dataset.

**16.** The apparatus according to any one of claims 9 to 15, further comprising:
a restoration unit, configured to: scale down the parameters of the n1 neurons; and/or scale up the parameters of the n2 neurons.

**17.** An image processing model training apparatus, comprising at least one processor, wherein the at least one processor is coupled to at least one memory; and
the at least one processor is configured to execute a computer program or instructions stored in the at least one memory, to enable the apparatus to perform the method according to any one of claims 1 to 8.

**18.** A readable storage medium, configured to store instructions, wherein when the instructions are executed, the method according to any one of claims 1 to 8 is implemented.

**19.** An image processing model training apparatus, comprising a processor and an interface circuit, wherein

the interface circuit is configured to receive code instructions and transmit the code instructions to the processor; and
the processor is configured to run the code instructions to perform the method according to any one of claims 1 to 8.

FIG. 1

FIG. 2

Image processing model 330

| Input layer | | Hidden layer | | ... | | Hidden layer | | Output layer |

FIG. 3

Controller                                    Image processing model

```
┌─────────────────────────────────┐
│  Determine a hidden layer at which │
│  parameters need to be scaled during│
│  current training, and a scaling ratio│
│  and a scaling multiple during current│
│           training              │
└─────────────────────────────────┘
```

```
┌─────────────────────────────────┐        ┌──────────┬──────────────────────────┐
│ Select neurons whose parameters need │     │   Loop   │  In a case that last training │
│          to be scaled            │        │          │        is not performed       │
└─────────────────────────────────┘        │          └──────────────────────────┤
                                            │                                      │
         Scale the                          │                                      │
       parameters of the                    │                                      │
       selected neurons  ─────────────────▶ │                                      │
                                            │    ┌──────────────┬───────────────┐  │
                                            │    │  Reference/  │ Perform current│  │
      Restore the scaled                    │    │ Callback ref │    training    │  │
      parameters of the                     │    └──────────────┴───────────────┘  │
           neurons  ───────────────────────▶│                                      │
                                            └──────────────────────────────────────┘
```

FIG. 4

| Input layer | → | Fully connected 2048*784 | Rectified linear unit Relu | → | Fully connected 2048*2048 | Rectified linear unit Relu | → | Fully connected 2048*2048 | Rectified linear unit Relu | → | Fully connected 10*2048 | → | Output layer |

FIG. 5

Input layer → Convolutional neural network CNN feature extraction network → Fully connected layer → Fully connected layer → Output layer

FIG. 6

Convolutional conv+rectified linear unit Relu

Convolutional conv+rectified linear unit Relu

Pooling

Convolutional conv+rectified linear unit Relu

Convolutional conv+rectified linear unit Relu

Convolutional conv+rectified linear unit Relu

Pooling

Fully connected Fc+rectified linear unit Relu

Scaleout

Fully connected Fc+rectified linear unit Relu

Scaleout

Fully connected Fc+rectified linear unit Relu

Scaleout

Output layer

Input layer

Convolutional conv+rectified linear unit Relu

Convolutional conv+rectified linear unit Relu

Pooling

Convolutional conv+rectified linear unit Relu

Convolutional conv+rectified linear unit Relu

Pooling

Convolutional conv+rectified linear unit Relu

Convolutional conv+rectified linear unit Relu

Convolutional conv+rectified linear unit Relu

Pooling

Convolutional conv+rectified linear unit Relu

FIG. 7

(a)          (b)

FIG. 8

| Video data | → | Decode | → | Format conversion | → | Process a size of an image | → | Vehicle detection model | → | Vehicle detection result |
|---|---|---|---|---|---|---|---|---|---|---|

FIG. 9

(a)          (b)

FIG. 10

Input layer → Convolutional conv1a → Pooling → Convolutional conv2a → Pooling → Convolutional conv3a → Convolutional conv3b → Pooling → Convolutional conv4a →

→ Convolutional conv4b → Pooling → Convolutional conv5a → Convolutional conv5b → Pooling → Fully connected Fc6 | Scaleout → Fully connected Fc7 | Scaleout → Output layer

**FIG. 11**

S1201

Input image data in a training dataset into an image processing model to perform processing, to obtain a processing result corresponding to the image data, where parameters of n1 neurons are scaled up, and parameters of n2 neurons are scaled down in the image processing model

S1202

Calculate an error between an annotation result of the image data in the training dataset and the processing result

S1203

Adjust parameters of the image processing model based on the error between the annotation result and the processing result

**FIG. 12**

1300

Processing unit 1301

Calculation unit 1302

Adjustment unit 1303

Scaling unit 1304

Restoration unit 1305

FIG. 13

Image processing model training apparatus 1400

Communication interface 1404

Processor 1402

1408

Memory 1406

FIG. 14

## INTERNATIONAL SEARCH REPORT

| International application No. |
|---|
| **PCT/CN2020/117900** |

**A. CLASSIFICATION OF SUBJECT MATTER**

G06N 3/08(2006.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

CNABS; CNTXT; DWPI; SIPOABS; USTXT; CNKI: 神经网络, 训练, 神经元, 参数, 因子, 缩放, 缩小, 放大, 过拟合, 正则化, 规范化, neural network, training, neuron+, parameter, scal+, zoom+, over-fitting, dropout, regularization, Normalization

**C. DOCUMENTS CONSIDERED TO BE RELEVANT**

| Category* | Citation of document, with indication, where appropriate, of the relevant passages | Relevant to claim No. |
|---|---|---|
| X | 袁宏进 等 (YUAN, Hongjin et al.). "基于DropWeight算法在图像分类中的研究 (Research on Image Classification Based on DropWeight Algorithm)" 信息通信 (Information & Communications), No. 194, 15 February 2019 (2019-02-15), pp. 25-29 | 1-19 |
| X | CN 110084368 A (GOOGLE INC.) 02 August 2019 (2019-08-02) description, paragraph [0033] | 1-19 |
| X | CN 110428042 A (INTERNATIONAL BUSINESS MACHINES CORPORATION) 08 November 2019 (2019-11-08) description, paragraphs [0012]-[0013] | 1-19 |
| A | CN 103548042 A (QUALCOMM INC.) 29 January 2014 (2014-01-29) entire document | 1-19 |
| A | CN 109344888 A (GUANGDONG UNIVERSITY OF TECHNOLOGY) 15 February 2019 (2019-02-15) entire document | 1-19 |
| A | US 2018005111 A1 (IBM) 04 January 2018 (2018-01-04) entire document | 1-19 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 December 2020** | **25 December 2020** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/117900**

| Patent document cited in search report | | | Publication date (day/month/year) | Patent family member(s) | | | Publication date (day/month/year) |
|---|---|---|---|---|---|---|---|
| CN | 110084368 | A | 02 August 2019 | US | 2019325313 | A1 | 24 October 2019 |
| CN | 110428042 | A | 08 November 2019 | US | 2019340500 | A1 | 07 November 2019 |
| CN | 103548042 | A | 29 January 2014 | JP | 2014517973 | A | 24 July 2014 |
| | | | | CN | 103548042 | B | 10 August 2016 |
| | | | | KR | 101549767 | B1 | 02 September 2015 |
| | | | | JP | 6113719 | B2 | 12 April 2017 |
| | | | | JP | 6117392 | B2 | 19 April 2017 |
| | | | | JP | 2016139420 | A | 04 August 2016 |
| | | | | EP | 2715620 | B1 | 14 December 2016 |
| | | | | US | 8583577 | B2 | 12 November 2013 |
| | | | | KR | 20140027415 | A | 06 March 2014 |
| | | | | WO | 2012162663 | A1 | 29 November 2012 |
| | | | | US | 2012303566 | A1 | 29 November 2012 |
| | | | | EP | 2715620 | A1 | 09 April 2014 |
| CN | 109344888 | A | 15 February 2019 | None | | | |
| US | 2018005111 | A1 | 04 January 2018 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• CN 202010077091